# EUROPÄISCHE PATENTANMELDUNG

(11) **EP 0 699 009 A1**
(43) Veröffentlichungstag der Anmeldung: **28.02.1996**
(21) Anmeldenummer: 94112793.8
(22) Anmeldetag: 17.08.1994
(51) Int. Cl.: H04Q 7/22

(54) **Rufuntervermittlungssystem für ein Mobilfunksystem mit Nachrichtenvermittlung**

(71) Anmelder: Alcatel SEL Aktiengesellschaft, D-70435 Stuttgart (DE); BELL TELEPHONE MANUFACTURING COMPANY Naamloze Vennootschap, B-2018 Antwerp (BE); ALCATEL N.V., NL-1077 XX Amsterdam (NL)
(72) Erfinder: Hupperich, Peter, D-71254 Ditzingen (DE); Vosters, Jos, B-9140 Temse (BE)
(74) Vertreter: Knecht, Ulrich Karl

(57) **Zusammenfassung**

Die Erfindung schlägt ein Untervermittlungssystem NSS für ein Mobilfunksystem MRS vor, bei dem ein Kommunikationsrechner COMP nach Eingang eines Rufes von einem rufenden Teilnehmer A und einem erfolglosem Vermittlungsversuch des Rufes eine Nachricht SM für den gerufenen Teilnehmer B erzeught und in einer Speichereinrichtung MEM Speichert. Ist der gerufene Teilnehmer B wieder erreichbar, sendet eine Dienstezentrale SMSC diese Nachricht an den gerufenen Teilnehmer aus. Die Nachricht SM enthält unter anderem die Teilnehmerkennung A-ID rufenden Teilnehmers A, um einen Rückruf einzuleiten.

## Beschreibung

Die Erfindung betrifft ein Vermittlungssubsystem (Network Subsystem) nach dem Oberbegriff des Anspruchs 1.

Ein derartiges Vermittlungssubsystem ist beschrieben in dem Artikel "GSM-Vermittlungssystem und Integration des Gesamtsystems" von M. Feldmann und J.P. Rissen auf S. 141-154 der Zeitschrift "Elektrisches Nachrichtenwesen", 2. Quartal 1993, Alcatel Alsthom Publications, Paris.

Dort wird ein Vermittlungssubsystem für das zellulare Mobilfunksystem GSM (Global System for Mobile Communications) beschrieben, das dessen Basisstationssubsystem mit dem ortsfesten Netz verbindet (s. Bild 2, S. 142). Das Vermittlungssubsystem enthält eine Funkvermittlungsstelle (MSC: Mobile Service Switching Centre) mit einer Besucherdatei (VLR: Visitor Location Register) und einen an die MSC angeschlossenen Kommunikationsrechner "Alcatel 8300" mit einer Heimatdatei (HLR: Home Location Register). Zur Vermittlung eines Rufes von einem rufenden Teilnehmer (des ortsfesten Netzes oder des Mobilfunksystems) an einen gerufenen Teilnehmer des Mobilfunksystems greift die MSC auf diese Dateien zu. "Die Teilnehmerposition wird in der HLR gespeichert und für den Verbindungsaufbau zur MS (Mobilstation) eines die Vermittlungsbereiche wechselnden (gerufenen) Teilnehmers genutzt ... Die HLR aktualisiert ihre Datenbank durch Annahme der neuen Position der Mobilstation, liefert der neuen VLR die Teilnehmerdaten und signalisiert der vorherigen VLR, daß sich die MS nicht mehr in deren Zone befindet ... Die HLR weiß immer, in welcher VLR sich eine (gerufene) MS zu einem bestimmten Zeitpunkt befindet. Ein Ruf vom öffentlichen Fernsprechnetz aus wird zum nächstgelegenen Gateway-MSC des PLMN (Public Land Mobile Network) geleitet, zu dem der gerufene mobile Teilnehmer gehört" (S. 150, rechte Spalte, 3. Abs.). Der Ruf kann nur dann vermittelt werden, falls der gerufene Teilnehmer erreichbar ist. Ist dies nicht der Fall, da z.B. die Mobilstation des gerufenen Teilnehmers nicht betriebsbereit ist, so ist das dort beschriebene Vermittlungssubsystem nicht in der Lage eine Kommunikationsmöglichkeit für die Teilnehmer zu schaffen.

Aufgabe der Erfindung ist es ein Vermittlungssubsystem vorzuschlagen, bei dem dieses Problem nicht auftritt.

Gelöst wird die Aufgabe durch ein Vermittlungssubsystem mit den Merkmalen des Anspruchs 1.

Demnach enthält das erfindungsgemäße Vermittlungssubsystem einen Kommunikationsrechner, der eine Nachricht für den gerufenen Teilnehmer erzeugt, falls dieser nicht erreichbar ist, und eine Speichereinrichtung zum Abspeichern dieser Nachricht, die Angaben über den rufenden Teilnehmer enthält. Somit kann der gerufene Teilnehmer etwa durch Abfrage der Nachricht zum einen feststellen, ob jemand ihn erreichen wollte, und zum anderen einen Rückruf einleiten.

Vorteilhafte Ausgestaltungen der Erfindung sind den Unteransprüchen zu entnehmen.

Im folgenden wird ein Ausführungsbeispiel der Erfindung anhand der beiliegenden Zeichnungen beschrieben, von denen:
- Fig. 1: schematisch ein Mobilfunksystem mit einem erfindungsgemäßen Vermittlungssubsystem zeigt;
- Fig. 2: die Datenstruktur einer Nachricht für den gerufenen Teilnehmer in Form einer Kurznachricht zeigt und
- Fig. 3: die Anzeige dieser Nachricht auf einem alphanumerischen Anzeigefeld der Mobilstation des gerufenen Teilnehmers darstellt.

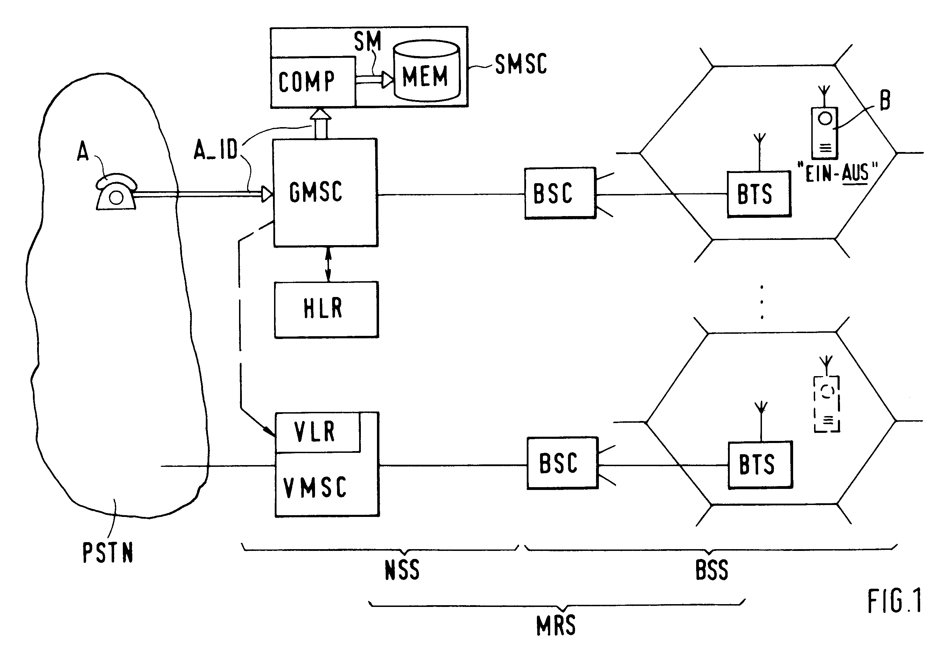

In Fig. 1 ist schematisch ein zum GSM-Standard passendes Mobilfunksystem MRS dargestellt. Dieses enthält ein Basisstationssubsystem BSS und ein damit verbundenes Vermittlungssubsystem NSS, daß mit einem öffentlichen Fernsprechnetz PSTN verbunden ist. Das Basisstationssubsystem enthält Basisstationsteuerungen BSC und damit verbundene Basisstationen BTS, die jeweils eine Funkzelle des Mobilfunksystems aus leuchten. Das Vermittlungssubsystem NSS enthält Funkvermittlungsstellen, die die Basisstationsteuerungen mit dem öffentlichen Fernsprechnetz verbinden. In dem gezeigten Beispiel enthält das Vermittlungssubsystem eine erste Funkvermittlungsstelle GMSC und eine zweite Funkvermittlungsstelle VMSC. Die erste Funkvermittlungsstelle GMSC ist mit einer Heimatdatei HLR und mit einer Dienstezentrale SMSC für Kurznachrichten verbunden. In diesem Beispiel kommt ein Ruf eines rufenden Teilnehmers A aus dem öffentlichen Fernsprechnetz für einen gerufenen Teilnehmer B innerhalb des Mobilfunksystems bei der ersten Funkvermittlungsstelle GMSC an. Die erste Funkvermittlungsstelle ist demnach ein sogenanntes Gateway Mobile Service Switching Centre, das Zugriff auf die Heimatdatei des rufenden Teilnehmers hat. Die zweite Funkvermittlungsstelle enthält eine Besucherdatei VLR zur Verwaltung eines Besucherbereiches, d.h. eines Funkzellenbereiches, indem der gerufene Teilnehmer B nicht fest registriert ist. Die zweite Funkvermittlungsstelle ist demnach ein sogenanntes Visitor Mobile Service Switching Centre.

Bei Eingang des Rufes von Teilnehmer A an der ersten Funkvermittlungsstelle GMSC, prüft diese mittels der Heimatdatei HLR, ob sich der gerufene Teilnehmer B im Heimatbereich oder in einem Besucherbereich des Mobilfunksystems MRS befindet. Ist der gerufene Teilnehmer erreichbar, so wird wie bekannt der Ruf vermittelt. Ist der gerufene Teilnehmer B nicht erreichbar, so stellt dies die erste Funkvermittlungsstelle GMSC anhand eines Eintrags in der Heimatdatei HLR fest. Die erste Funkvermittlungsstelle leitet dann die Teilnehmerkennung A-ID des rufenden Teilnehmers A an die Dienstezentrale SMSC weiter. Die Dienstezentrale enthält einen Kommunikationsrechner COMP der mittels dieser Teilnehmerkennung A-ID eine Nachricht als Kurznachricht SM, d.h. als alphanumerische Datensequenz, erzeugt. Diese Kurznachricht wird in einer mit dem Kommunikationsrechner verbundenen Speichereinrichtung MEM abgelegt.

Sobald der gerufene Teilnehmer B wieder erreichbar ist, beispielsweise durch Einschalten seiner Mobilstation, wird das Einbuchen dieses Teilnehmers mittels Zugriff auf die Heimatdatei HLR ausgelöst. Nach dem Einbuchen signalisiert die erste Funkvermittlungsstelle GMSC an die Dienstezentrale SMSC den neuen Status. Der Kommunikationsrechner COMP innerhalb der Dienstezentrale steuert nun das Senden der abgespeicherten Kurznachricht an den gerufenen Teilnehmer B. Das Aussenden der Kurznachricht erfolgt entsprechend dem im GSM standardisierten Kurznachrichtendienst (Short Message Service). Die Kurznachricht wird nach Empfang auf dem Anzeigefeld der Mobilstation des gerufenen Teilnehmers B angezeigt. Dieser kann nun mittels Rückruf eine Verbindung mit dem rufenden Teilnehmer A aufnehmen.

Befindet sich der gerufene Teilnehmer B in seinem Heimatbereich, so wird die Kurznachricht direkt dorthin ausgesendet. Wurde der gerufene Teilnehmer B zuletzt in einem Besucherbereich registriert, so ist es besonders vorteilhaft, die Kurznachricht in diesem Besucherbereich auszusenden. Dazu leitet die erste Funkvermittlungsstelle GMSC die Kurznachricht SM an die zweite Funkvermittlungsstelle VMSC, die die Besucherdatei VLR verwaltet, weiter. Der gerufene Teilnehmer B erhält somit unmittelbar die Kurznachricht, wenn er sich in ein und demselben Besucherbereich aufhält und dort nur zeitweise nicht erreichbar war.

In diesem Beispiel ist das Kriterium für die Erreichbarkeit des gerufenen Teilnehmers B der Einbuchstatus in der Heimatdatei HLR. Demnach wird hier festgestellt, ob die Mobilstation des gerufenen Teilnehmers B betriebsbereit ist, d.h. ein- oder ausgeschaltet ist oder ob die Teilnehmerkarte ein- oder ausgesteckt ist. Es ist weiterhin auch denkbar, daß der gerufene Teilnehmer "für nicht erreichbar" eingestuft wird, falls seine Mobilstation zwar betriebsbereit ist, er sich jedoch nicht meldet. Dazu vermittelt die erste Funkvermittlungsstelle GMSC zunächst den Ruf bis zur Mobilstation des gerufenen Teilnehmers und wartet eine vorgegebene Zeitspanne lang darauf, daß sich der gerufene Teilnehmer B meldet. Meldet er sich innerhalb der Zeitspanne von z.B. 30 Sek. nicht, wird der gerufene Teilnehmer B als "nicht erreichbar" eingestuft. Danach wird, wie beschrieben, eine Nachricht für den gerufenen Teilnehmer B erzeugt und abgespeichert.

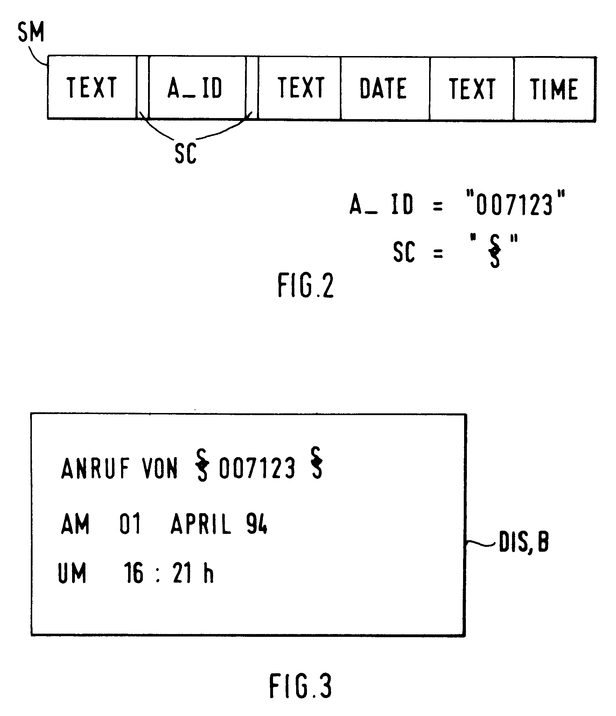

Fig. 2 zeigt eine mögliche Datenstruktur für eine Nachricht, die die Dienstezentrale in Form einer Kurznachricht SM erzeugt. Die Kurznachricht SM enthält fest vorgegebene Textdatenfelder TEXT und variable Datenfelder, in die die Teilnehmerkennung A-ID, das Datum DATE und die Zeit TIME eingetragen werden. Da die Kurznachricht nach GSM als alphanumerische Datensequenz definiert ist, kann eine darin enthaltene Steuersequenz wie hier beispielsweise die Teilnehmerkennung A-ID nicht erkannt werden.

Erfindungsgemäß wird nun die Teilnehmerkennung A-ID des rufenden Teilnehmers mittels Sonderzeichen SC markiert. Dadurch kann die Teilnehmerkennung A-ID beim Empfang der Kurznachricht M als Steuersequenz erkannt werden. Diese Steuersequenz wird als Rufnummer in der Mobilstation des gerufenen Teilnehmers B zwischengespeichert und dient für einen vom gerufenen Teilnehmer B ausgelösten Rückruf zum rufenden Teilnehmer A. Beispielsweise führt die Mobilstation des gerufenen Teilnehmers B eine automatische Wahl mit der zwischengespeicherten Rufnummer des Teilnehmers A aus, sobald Teilnehmer B den Handapparat seiner Mobilstation abnimmt.

Fig. 3 zeigt die Kurznachricht, wie sie auf einem alphanumerischen Anzeigefeld DIS der Mobilstation des gerufenen Teilnehmers B angezeigt wird. In diesem Beispiel erhält der gerufene Teilnehmer als Kurznachricht eine Mitteilung über einen eingegangenen Ruf, wobei die Teilnehmerkennung des rufenden Teilnehmers, das Datum und die Uhrzeit des Rufes angegeben sind.

Die Erfindung wurde in diesem Beispiel anhand der Erzeugung und Speicherung einer Kurznachricht beschrieben. Steht eine Dienstezentrale für den Kurznachrichtendienst innerhalb des Mobilfunksystems nicht zur Verfügung, so ist es auch denkbar, eine vergleichbare Nachricht in der Heimatdatei HLR zu erzeugen. Die Heimatdatei HLR wird dann von einem Kommunikationsrechner verwaltet, der eine vergleichbare Nachricht erzeugt und speichert. Das Aussenden der Nachricht erfolgt z.B. im Rahmen der nach GSM standardisierten Zusatzdienst-Verwaltung (Supplementary Services Management). Es ist auch denkbar, die Nachricht mittels Sprachprozessoren zur Sprachausgabe aufzubereiten. Die erfindungsgemäße zentrale Speicherung von ankommenden Rufen ist auf vielfache Art und Weise ausführbar. So ist beispielsweise eine sprachgesteuerte Unterstützung dieser Rufspeicherung denkbar, bei der sowohl dem Rufenden als auch dem Gerufenen sprachakustisch der Eingang des Rufes angezeigt wird.

## Patentansprüche

1. Vermittlungssubsystem (NSS) für ein Mobilfunksystem (MRS) mit mindestens einer Funkvermittlungsstelle (GMSC) zur Vermittlung eines Rufes von einem rufenden Teilnehmer (A) an einen gerufenen Teilnehmer (B) des Mobilfunksystems (MRS),
**gekennzeichnet durch**
- einen mit der Funkvermittlungsstelle (GMSC) verbundenen Kommunikationsrechner (COMP), der, falls der gerufene Teilnehmer (B) nicht erreichbar ist, eine Nachricht (SM) erzeugt, die zumindest eine Teilnehmererkennung (A-ID) des rufenden Teilnehmers (A) enthält, und durch
- eine mit dem Kommunikationsrechner (COMP) verbundene Speichereinrichtung (MEM), in der der Kommunikationsrechner (COMP) die Nachricht für den gerufenen Teilnehmer (B) abspeichert.

2. Vermittlungssubsystem (NSS) nach Anspruch 1,
dadurch gekennzeichnet, daß der Kommunikationsrechner (COMP) und die Speichereinrichtung (MEM) in eine Dienstezentrale (SMSC) für Kurznachrichten integriert sind und daß der Kommunikationsrechner (COMP) die Nachricht (SM) als eine Kurznachricht (alphanumerische Datensequenz) erzeugt und abspeichert.

3. Vermittlungssubsystem (NSS) nach Anspruch 2,
dadurch gekennzeichnet, daß der Kommunikationsrechner (COMP) die Nachricht (SM) als eine solche Kurznachricht erzeugt, die das Datum (DATE) und die Uhrzeit (TIME) des Rufes enthält.

4. Vermittlungssubsystem (NSS) nach Anspruch 2,
dadurch gekennzeichnet, daß der Kommunikationsrechner (COMP) die Nachricht (SM) als eine solche Kurznachricht erzeugt, in der die Teilnehmerkennung (A-ID) mit mindestens einem Sonderzeichen (SC) verknüpft ist, das die Teilnehmererkennung (A-ID) als eine Steuersequenz (Rufnummer) für einen Rückruf zum rufenden Teilnehmer (A) markiert.

5. Vermittlungssubsystem (NSS) nach Anspruch 1,
dadurch gekennzeichnet, daß der Kommunikationsrechner (COMP) und die Speichereinrichtung (MEM) die Heimatdatei (HLR) des gerufenen Teilnehmers (B) verwalten und daß der Kommunikationsrechner (COMP) die Nachricht (SM) in der Heimatdatei (HLR) abspeichert.

6. Vermittlungssubsystem (NSS) nach Anspruch 5,
dadurch gekennzeichnet, daß die Funkvermittlungsstelle (GMSC) die von dem Kommunikationsrechner (COMP) erzeugte Nachricht (SM) an eine andere Funkvermittlungsstelle (VMSC) weiterleitet, die diejenige Besucherdatei (VLR) verwaltet, in der der gerufene Teilnehmer (B) zuletzt registriert ist, und daß die andere Funkvermittlungsstelle (VMSC) die Nachricht (SM) in dieser Besucherdatei (VLR) abspeichert.
